# EUROPEAN PATENT APPLICATION

(11) **EP 4 592 510 A1**
(43) Date of publication of application: **30.07.2025**
(21) Application number: 25154259.3
(22) Date of filing: 27.01.2025
(51) Int. Cl.: F02C 3/10, F01D 25/28, F02C 3/14, F02C 3/22, F02C 7/20, F02K 3/06

(54) **INTERMEDIATE CASE FOR AIRCRAFT PROPULSION SYSTEM HOUSING**

(30) Priority: 25.01.2024 US 202418422343
(71) Applicant: RTX Corporation, Farmington, CT 06032 (US)
(72) Inventor: SOBANSKI, Jon Erik, Glastonbury, 06033 (US); BREAULT, Andrew E., Glastonbury, 06043 (US)
(74) Representative: Dehns

(57) **Abstract**

An assembly is provided for an aircraft. This aircraft assembly includes a support structure (78), a fan rotor (42), a power turbine rotor (43), a power turbine case (76), an intermediate case (80), a bypass flowpath (100), a core duct (148) and a core flowpath (110). The fan rotor (42) is rotatably supported by the support structure (78). The power turbine rotor (43) is coupled to and configured to drive rotation of the fan rotor (42). The power turbine case (76) houses the power turbine rotor (43). The intermediate case (80) extends axially along an axis (22) between and structurally ties the power turbine case (76) to the support structure (78). The bypass flowpath (100) is fluidly coupled with and downstream of the fan rotor (42). An inner wall of the bypass flowpath (100) is formed by the intermediate case (80). The core duct (148) extends radially across the intermediate case (80). The core flowpath (110) extends across the power turbine rotor (43) and through the core duct (148).

## Description

### BACKGROUND OF THE DISCLOSURE

### 1. Technical Field

This disclosure relates generally to an aircraft and, more particularly, to a housing structure for an aircraft propulsion system.

### 2. Background Information

Various housing structures are known in the art for an aircraft propulsion system with a turbine engine. While these known housing structures have various benefits, there is still room in the art for improvement.

### SUMMARY OF THE DISCLOSURE

According to an aspect of the present disclosure, an assembly is provided for an aircraft. This aircraft assembly includes a support structure, a fan rotor, a power turbine rotor, a power turbine case, an intermediate case, a bypass flowpath, a core duct and a core flowpath. The fan rotor is rotatably supported by the support structure. The power turbine rotor is coupled to and configured to drive rotation of the fan rotor. The power turbine case houses the power turbine rotor. The intermediate case extends axially along an axis between and structurally ties the power turbine case to the support structure. The bypass flowpath is fluidly coupled with and downstream of the fan rotor. An inner wall of the bypass flowpath is formed by the intermediate case. The core duct extends radially across the intermediate case. The core flowpath extends across the power turbine rotor and through the core duct.

According to another aspect of the present disclosure, another assembly is provided for an aircraft. This aircraft assembly includes a fan rotor, a geartrain, a support structure, a power turbine rotor, a power turbine case, an intermediate case, a core duct and a core flowpath. The geartrain is coupled to the fan rotor. The support structure circumscribes and supports the geartrain. The power turbine rotor is coupled to the geartrain. The power turbine rotor is configured to drive rotation of the fan rotor through the geartrain. The power turbine case houses the power turbine rotor. The intermediate case extends axially along an axis between and structurally ties the power turbine case to the support structure. The core duct extends radially across the intermediate case. The core flowpath extends across the power turbine rotor and through the core duct.

According to still another aspect of the present disclosure, another assembly is provided for an aircraft. This aircraft assembly includes a support structure, a fan section, a power turbine section, a power turbine case, an intermediate case, a turbine engine core, an airframe structure and a mounting link. The fan section includes a fan rotor. The fan rotor is rotatably supported by the support structure. The power turbine section includes a power turbine rotor. The power turbine rotor is coupled to and configured to drive rotation of the fan rotor. The power turbine case houses the power turbine section. The intermediate case extends axially along an axis between and structurally ties the power turbine case to the support structure. The turbine engine core includes a core compressor section, a core combustor section and a core turbine section. A core flowpath extends through the core compressor section, the core combustor section, the core turbine section, the power turbine section and radially across the intermediate case and a bypass flowpath between an inlet into the core flowpath and an exhaust from the core flowpath. The bypass flowpath is downstream of the fan rotor and radially outboard of the intermediate case, the power turbine section and the turbine engine core. The mounting link extends radially across the intermediate case and structurally ties the support structure to the airframe structure. The mounting link is coupled to the support structure independent of the intermediate case.

The mounting link may be configured as or otherwise include a thrust link.

The assembly may also include a plurality of core ducts arranged circumferentially around the axis. Each of the core ducts extends radially across and is structurally independent of the intermediate case. The core flowpath may split into a plurality of flowpath legs downstream of the power turbine section. Each of the flowpath legs may extend through a respective one of the core ducts.

The assembly may also include a thrust link extending radially across the intermediate case and fixed to the support structure.

The core duct may be structurally independent of the intermediate case.

The core duct may be movable relative to the intermediate case.

The core duct may also extend radially across the bypass flowpath.

The assembly may also include an evaporator disposed in the core duct.

The assembly may also include a condenser disposed radially outboard of the bypass flowpath. The core flowpath may extend away from the power turbine rotor, through the evaporator, to the condenser.

The assembly may also include a condenser disposed radially outboard of the bypass flowpath. The core flowpath may extend away from the power turbine rotor, through the core duct, to the condenser.

The core duct may be one of a plurality of core ducts extending radially across the intermediate case. The core ducts may be arranged circumferentially about the axis in an array. The core flowpath may split into a plurality of flowpath legs downstream of the power turbine rotor. Each of the flowpath legs may extend through a respective one of the core ducts.

The support structure may include an inner platform. The inner platform may be axially next to and downstream of the fan rotor. The inner wall may be a first inner wall. The inner platform may form a second inner wall of the bypass flowpath upstream of the first inner wall.

The assembly may also include a geartrain coupling the power turbine rotor to the fan rotor. The support structure may circumscribe and support the geartrain.

The assembly may also include an airframe structure and a thrust link. The thrust link may extend radially across the intermediate case and may structurally tie the support structure to the airframe structure. The thrust link may be coupled to the support structure independent of the intermediate case.

The assembly may also include a torque link structurally tying at least one of the intermediate case or the power turbine case to the airframe structure.

The assembly may also include an inner nacelle structure axially overlapping and extending circumferentially about the power turbine case. The inner wall may include a first inner wall. The inner nacelle structure may form a second inner wall of the bypass flowpath downstream of the first inner wall.

The assembly may also include a fan section, a power turbine section and a turbine engine core. The fan section may include the fan rotor. The power turbine section may include the power turbine rotor. The turbine engine core may include a core compressor section, a core combustor section and a core turbine section. The core flowpath may extend through the core compressor section, the core combustor section, the core turbine section, the power turbine section and the core duct between an inlet into the core flowpath and an exhaust from the core flowpath.

The power turbine section may be disposed axially between the fan section and the turbine engine core.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a side sectional schematic illustration of an aircraft propulsion system mounted to an airframe structure.
FIG. 2 is a perspective illustration of a portion of a housing inner structure coupled to various mounting structures.
FIG. 3 is a perspective illustration of a portion of the housing inner structure.
FIG. 4 is a perspective cutaway illustration of an intermediate case of the housing inner structure.
FIG. 5 is a schematic illustration of a portion of the aircraft propulsion system with a water and heat energy recovery system.
FIG. 6 is a perspective illustration of an evaporator array arranged with a condenser array.

### DETAILED DESCRIPTION

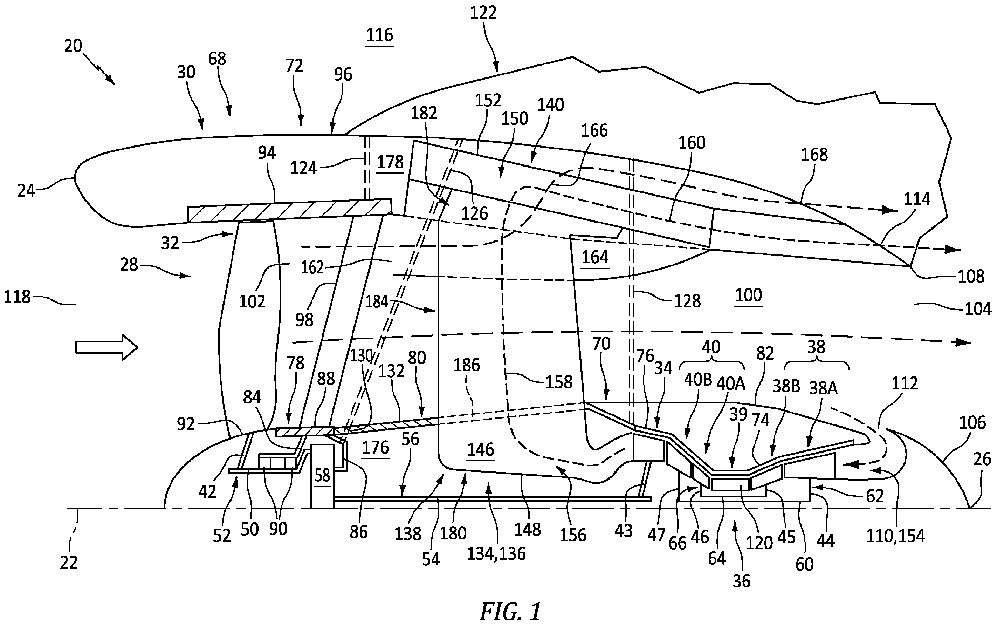

FIG. 1 illustrates a propulsion system 20 for an aircraft. The aircraft may be an airplane, a drone (e.g., an unmanned aerial vehicle (UAV)) or any other manned or unmanned aerial vehicle or system. The aircraft propulsion system 20 extends axially along an axis 22 between a forward, upstream end 24 of the aircraft propulsion system 20 and an aft, downstream end 26 of the aircraft propulsion system 20. The aircraft propulsion system 20 of FIG. 1 includes a turbine engine 28 and a nacelle 30 housing and forming an aerodynamic cover over the turbine engine 28.

The turbine engine 28 of FIG. 1 includes a fan section 32, a power turbine (PT) section 34 and a turbine engine core 36; e.g., gas generator. The engine core 36 includes a core compressor section 38, a core combustor section 39 and a core turbine section 40. The core compressor section 38 of FIG. 1 includes a low pressure compressor (LPC) section 38A and a high pressure compressor (HPC) section 38B. The core turbine section 40 of FIG. 1 includes a high pressure turbine (HPT) section 40A and a low pressure turbine (LPT) section 40B.

Each of the engine sections 32, 34, 38A, 38B, 40A and 40B includes a respective bladed rotor 42-47. Each of these engine rotors 42-47 includes a plurality of rotor blades arranged circumferentially around and connected to one or more respective rotor disks. The rotor blades, for example, may be formed integral with or mechanically fastened, welded, brazed and/or otherwise attached to the respective rotor disk(s).

The fan rotor 42 of FIG. 1 is connected to a fan shaft 50. At least (or only) the fan rotor 42 and the fan shaft 50 collectively form a fan rotating structure 52. The PT rotor 43 is connected to a power turbine (PT) shaft 54. At least (or only) the PT rotor 43 and the PT shaft 54 collectively form a power turbine (PT) rotating structure 56. This PT rotating structure 56 of FIG. 1 is coupled to the fan rotating structure 52 through a geartrain 58 such that the PT rotating structure 56 may rotate at a different (e.g., faster) rotational velocity than the fan rotating structure 52 and its fan rotor 42. The PT rotating structure 56 and its PT rotor 43 are thereby configured to drive rotation of the fan rotating structure 52 and its fan rotor 42 through the geartrain 58. However, it is contemplated the fan rotor 42 may alternatively be coupled to the PT rotor 43 without the geartrain 58 such that the PT rotor 43 is configured to directly drive rotation of the fan rotor 42 through a shaft (e.g., the PT shaft 54) or a shaft assembly. Referring again to FIG. 1, the fan rotating structure 52 and its fan rotor 42 and the PT rotating structure 56 and its PT rotor 43 are each rotatable about the axis 22; e.g., a centerline axis and rotational axis of the engine elements 42, 43, 50, 52, 54 and 56.

The LPC rotor 44 of FIG. 1 is coupled to and rotatable with the LPT rotor 47. The LPC rotor 44 of FIG. 1, for example, is connected to the LPT rotor 47 through a low speed shaft 60. At least (or only) the LPC rotor 44, the LPT rotor 47 and the low speed shaft 60 collectively form a low speed rotating structure 62; e.g., a low speed spool of the engine core 36. This low speed rotating structure 62 and its members 44, 47 and 60 may be rotatable about the axis 22; e.g., a centerline axis and rotational axis of the engine elements 44, 47, 60 and 62. However, in other embodiments, the low speed rotating structure 62 and its members 44, 47 and 60 may alternatively be rotatable about another axis which is radially and/or angularly offset from the axis 22.

The HPC rotor 45 of FIG. 1 is coupled to and rotatable with the HPT rotor 46. The HPC rotor 45 of FIG. 1, for example, is connected to the HPT rotor 46 through a high speed shaft 64. At least (or only) the HPC rotor 45, the HPT rotor 46 and the high speed shaft 64 collectively form a high speed rotating structure 66; e.g., a high speed spool of the engine core 36. This high speed rotating structure 66 and its members 45, 46 and 64 may be rotatable about the axis 22; e.g., a centerline axis and rotational axis of the engine elements 45, 46, 64 and 66. However, in other embodiments, the high speed rotating structure 66 and its members 45, 46 and 64 may alternatively be rotatable about another axis which is radially and/or angularly offset from the axis 22.

The engine sections 32, 34, 40B, 40A, 39, 38B and 38A as well as the engine rotors 42, 43, 47, 46, 45 and 44 of FIG. 1 are arranged (e.g., sequentially) along the axis 22 within a stationary propulsion system housing 68. This propulsion system housing 68 includes a housing inner structure 70 and a housing outer structure 72.

The housing inner structure 70 of FIG. 1 includes a core casing structure 74, a power turbine (PT) case 76, a support structure 78 and an intermediate case 80. This housing inner structure 70 also includes an inner structure 82 of the nacelle 30.

The core casing structure 74 houses the engine sections 38A-40B and their engine rotors 44-47. The core casing structure 74 of FIG. 1, for example, is disposed radially outboard of, extends axially along (e.g., axially overlaps) and extends circumferentially about (e.g., circumscribes) each of the engine rotors 44-47. The core casing structure 74 also rotatably supports the low speed rotating structure 62 and its members 44, 46 and 60 as well as the high speed rotating structure 66 and its members 45, 46 and 64. More particularly, the low speed rotating structure 62 and the high speed rotating structure 66 are rotatably supported by a plurality of bearings (not shown), and these bearings are connected to the core casing structure 74 through a set of bearing supports (not shown); e.g., annular support frames.

The PT case 76 houses the PT section 34 and its PT rotor 43. The PT case 76 of FIG. 1, for example, is disposed radially outboard of, extends axially along (e.g., axially overlaps) and extends circumferentially about (e.g., circumscribes) the PT rotor 43. The PT case 76 also rotatably supports the PT rotating structure 56 and its members 43 and 54. More particularly, the PT rotating structure 56 is rotatably supported by at least one bearing (not shown), and this bearing is connected to the PT case 76 through a bearing support (not shown); e.g., an annular support frame. The PT case 76 may be located axially next to (e.g., adjacent) and forward of the core casing structure 74. An axial aft end of the PT case 76, for example, may be abutted against and mechanically attached to an axial forward end of the core casing structure 74. The core casing structure 74 and, thus, the engine core 36 may thereby be structurally tied to the PT case 76. The present disclosure, however, is not limited to such an exemplary arrangement.

The support structure 78 of FIG. 1 is configured to support the fan rotating structure 52 and the geartrain 58. The support structure 78 of FIG. 1, for example, includes a forward bearing support 84 (e.g., an annular support frame), a geartrain support 86 (e.g., an annular support frame or a bulkhead) and an inner platform 88. The forward bearing support 84 and the geartrain support 86 are connected to (e.g., formed integral with or otherwise attached to) the inner platform 88. The forward bearing support 84 projects radially inward from the inner platform 88 to an inner portion which supports one or more bearings 90. These bearings 90 rotatably mount the fan rotating structure 52 and its fan shaft 50 to the support structure 78 and its forward bearing support 84. The geartrain support 86 projects radially inward from the inner platform 88 to an inner portion which supports (e.g., anchors) at least one component of the geartrain 58; e.g., a carrier, a ring gear, etc. Here, the geartrain 58 of FIG. 1 is disposed axially between the forward bearing support 84 and the geartrain support 86; however, the present disclosure is not limited to such an exemplary arrangement. The inner platform 88 of FIG. 1 extends axially along the axis 22 from an axial forward end of the inner platform 88 to an axial aft end of the inner platform 88, where the forward end of the inner platform 88 is located axially next to and aft, downstream of an inner platform 92 of the fan rotor 42. The inner platform 88 extends circumferentially around the axis 22, thereby axially overlapping and circumscribing the forward bearing support 84, the geartrain support 86 and the geartrain 58.

The intermediate case 80 is configured to rigidly and structurally tie the PT section 34 and its PT case 76 to the fan section 32, the geartrain 58 and/or the support structure 78. The intermediate case 80 is also configured to locate the PT section 34 and its PT case 76 relative to the fan section 32, the geartrain 58 and/or the support structure 78 such that, for example, a centerline of each element 42, 43 and 58 is coaxial during propulsion system operation. The intermediate case 80 of FIG. 1, for example, extends axially between and is connected to PT case 76 and the support structure 78. An axial aft end of the intermediate case 80 may be abutted against and mechanically attached to (e.g., via a bolted connection) an axial forward end of the PT case 76. An axial forward end of the intermediate case 80 may be abutted against and mechanically attached to (e.g., via a bolted connection) the support structure 78 and, for example, an axial aft end of the inner platform 88. The intermediate case 80 extends circumferentially around the axis 22. The intermediate case 80 of FIG. 1 thereby axially overlaps and circumscribes the PT rotating structure 56 and its PT shaft 54. The intermediate case 80 may also axially overlap and circumscribe the geartrain support 86.

The nacelle inner structure 82 houses and provides an aerodynamic cover over the PT case 76 and the core casing structure 74. The nacelle inner structure 82 of FIG. 1, for example, is disposed radially outboard of, extends axially along (e.g., axially overlaps) and extends circumferentially about (e.g., circumscribes) the PT section 34 and its PT case 76 as well as the engine core 36 and its core casing structure 74. The nacelle inner structure 82 may also be connected to the intermediate case 80, for example axially towards the aft end of the intermediate case 80. With this arrangement, the nacelle inner structure 82 may extend axially along (e.g., axially overlap) and extend circumferentially about (e.g., circumscribe) an axial aft end portion of the intermediate case 80.

The housing outer structure 72 includes an outer case 94 (e.g., a fan case) and an outer structure 96 of the nacelle 30. The outer case 94 houses the fan section 32 and its fan rotor 42. The outer case 94 of FIG. 1, for example, is disposed radially outboard of, extends axially along (e.g., axially overlaps) and extends circumferentially about (e.g., circumscribes) the fan rotor 42. This outer case 94 is also disposed radially outboard of, extends axially along (e.g., axially overlaps) and extends circumferentially about (e.g., circumscribes) the support structure 78 and an axial forward portion of the intermediate case 80. The outer case 94 of FIG. 1 is also connected to (e.g., structurally tied to) the support structure 78 and its inner platform 88 by an array of guide vanes 98; e.g., structural fan exit guide vanes.

The nacelle outer structure 96 houses and provides an aerodynamic cover over the outer case 94. The nacelle outer structure 96 of FIG. 1, for example, is disposed radially outboard of, extends axially along (e.g., axially overlaps) and extends circumferentially about (e.g., circumscribes) the outer case 94. The nacelle outer structure 96 is also disposed radially outboard of, extends axially along (e.g., axially overlaps) and extends circumferentially about (e.g., circumscribes) the intermediate case 80 and the nacelle inner structure 82. With this arrangement, the nacelle outer structure 96 and the outer case 94 form respective walls and a radial outer peripheral boundary of a bypass flowpath 100 (e.g., an annular flowpath) within the aircraft propulsion system 20 and its turbine engine 28. Similarly, the support structure 78 and its inner platform 88, the intermediate case 80 and the nacelle inner structure 82 form respective walls and a radial inner peripheral boundary of the bypass flowpath 100 within the aircraft propulsion system 20 and its turbine engine 28. This bypass flowpath 100 extends axially along the axis 22 within the aircraft propulsion system 20 from an airflow inlet 102 into the bypass flowpath 100 to an airflow exhaust 104 from the bypass flowpath 100. The bypass inlet 102 of FIG. 1 is formed radially between the inner platform 88 and the outer case 94, axially next to and downstream of the fan section 32 and its fan rotor 42. The bypass exhaust 104 of FIG. 1 is formed radially between the nacelle outer structure 96 and a tail cone 106 of the housing inner structure 70 at a trailing edge 108 of the housing outer structure 72 and its nacelle outer structure 96.

A core flowpath 110 (e.g., an annular flowpath) extends sequentially through the LPC section 38A, the HPC section 38B, the combustor section 39, the HPT section 40A, the LPT section 40B and the PT section 34 from an airflow inlet 112 into the core flowpath 110 to a combustion products exhaust 114 from the core flowpath 110. The core inlet 112 of FIG. 1 is disposed at (e.g., on, adjacent or proximate) or near the propulsion system downstream end 26. This core inlet 112 may be formed by the housing inner structure 70, for example, axially between the nacelle inner structure 82 and the tail cone 106. The core exhaust 114 of FIG. 1 is disposed radially outboard of the core inlet 112, the engine core 36 and the bypass flowpath 100. The core exhaust 114 of FIG. 1, for example, is formed by the housing outer structure 72. The core exhaust 114 may be adjacent and fluidly coupled with an environment 116 external to (e.g., outside of) the aircraft propulsion system 20. However, it is contemplated the core exhaust 114 may alternatively be adjacent and fluidly coupled with the bypass flowpath 100.

The engine core 36 may be configured as a reverse flow engine core. The core flowpath 110 of FIG. 1, for example, extends through any one or more or all of the engine sections 38A-40B and 34 in an axially forward direction. Similarly, the aircraft propulsion system 20 and its turbine engine 28 are configured to move through the external environment 116 in the axially forward direction; e.g., during forward aircraft flight. By contrast, the bypass flowpath 100 extends axially within the aircraft propulsion system 20 and its turbine engine 28 in an axially aft direction that is opposite the axially forward direction. With such an arrangement, the engine sections 38A-40B, 34 and 32 may be arranged sequentially along the axis 22 between the propulsion system downstream end 26 and the propulsion system upstream end 24.

During operation, air enters the aircraft propulsion system 20 through a propulsion system inlet 118. This air is directed through the fan section 32 and into the bypass flowpath 100. The air directed into the bypass flowpath 100 may be referred to as "bypass air". Some of this bypass air is directed into the engine core 36 and its core flowpath 110 through the core inlet 112. The air directed into the core flowpath 110 may be referred to as "core air".

The core air is compressed by the LPC rotor 44 and the HPC rotor 45 and directed into a (e.g., annular) combustion chamber 120 of a (e.g., annular) combustor in the combustor section 39. Fuel is injected into the combustion chamber 120 and mixed with the compressed core air to provide a fuel-air mixture. Briefly, the fuel may be or otherwise include a non-hydrocarbon fuel such as hydrogen fuel (H₂ gas) and/or a hydrocarbon fuel (e.g., jet fuel, sustainable aviation fuel (SAF), etc.) The fuel-air mixture is ignited and combustion products thereof flow through and sequentially drive rotation of the HPT rotor 46, the LPT rotor 47 and the PT rotor 43. The rotation of the HPT rotor 46 and the LPT rotor 47 respectively drive rotation of the HPC rotor 45 and the LPC rotor 44 and, thus, compression of the air received from the core inlet 112. The rotation of the PT rotor 43 (e.g., independently) drives rotation of the fan rotor 42. The rotation of the fan rotor 42 propels the bypass air through the bypass flowpath 100 and out of the bypass exhaust 104 into the external environment 116 to provide forward aircraft thrust. The propulsion of the bypass air may account for a majority of thrust generated by the aircraft propulsion system 20.

The aircraft propulsion system 20 and its turbine engine 28 are mounted to an airframe structure 122 of the aircraft. For ease of description, the airframe structure 122 is generally described as a pylon that extends between and structurally ties the aircraft propulsion system 20 to a wing, a fuselage, or an empennage of the aircraft. The airframe structure 122, however, may alternatively be configured as another component of the aircraft's airframe.

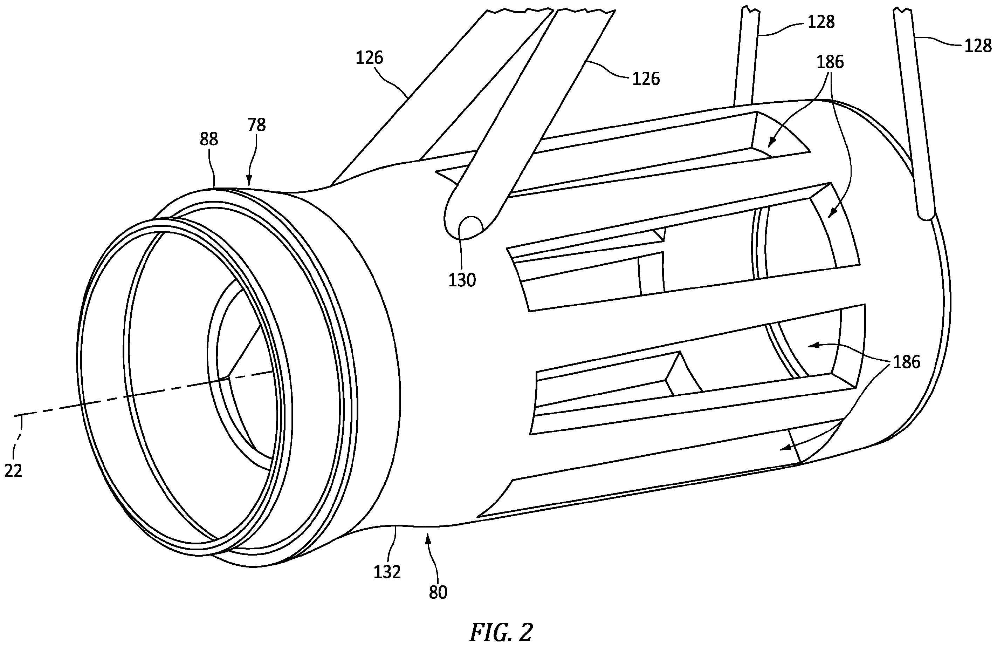

The aircraft propulsion system 20 and its turbine engine 28 of FIG. 1 are mounted to the airframe structure 122 by at least one outer case mount 124 (e.g., a fan case mount), one or more thrust links 126 and/or one or more inner case mounts 128 (e.g., engine core mounts, torque links, etc.). The outer case mount 124 is attached to and extends radially between the outer case 94 and the airframe structure 122. This outer case mount 124 structurally ties and is configured to transfer substantially radial loads and/or circumferential loads (e.g., non-axial loads) between the airframe structure 122 and the turbine engine 28. The thrust links 126 are attached to and extend radially between the airframe structure 122 and the support structure 78. More particularly, each of these thrust links 126 extends radially across the intermediate case 80 from the airframe structure 122 to the support structure 78 and, for example, its bearing support 84; see also FIG. 2. These thrust links 126 structurally tie and are configured to transfer substantially thrust loads (e.g., axial loads) between the turbine engine 28 and the airframe structure 122. The inner case mounts 128 are attached to and extend radially between the airframe structure 122 and the intermediate case 80 and/or the PT case 76; e.g., a bolted connection between the intermediate case 80 and the PT case 76. These inner case mounts 128 structurally tie and are configured to transfer substantially radial loads and/or circumferential loads (e.g., non-axial loads) between the turbine engine 28 and the airframe structure 122. The mounting elements 124, 126 and 128 thereby fixedly connect the aircraft propulsion system 20 and its turbine engine 28 to the airframe structure 122.

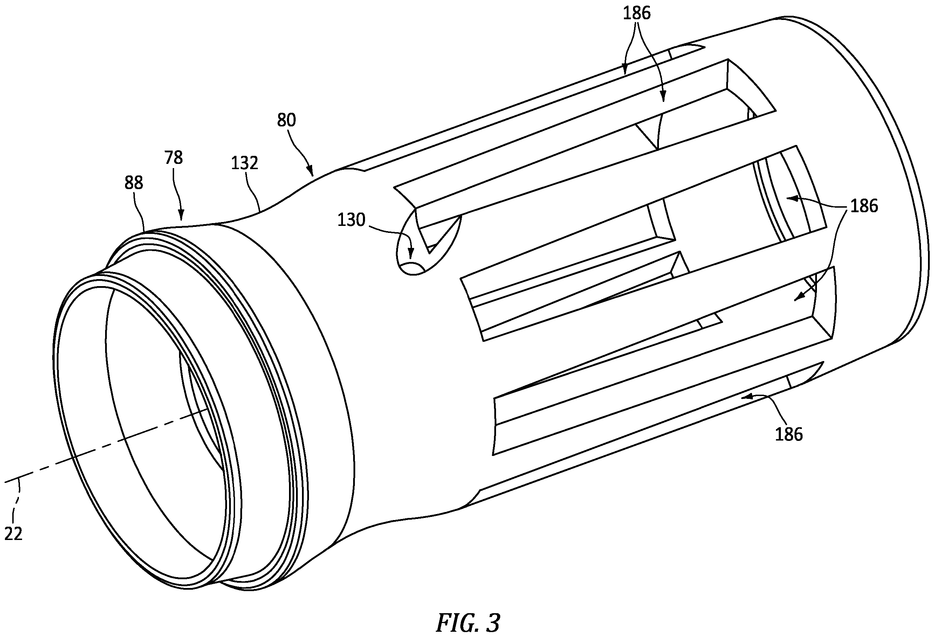

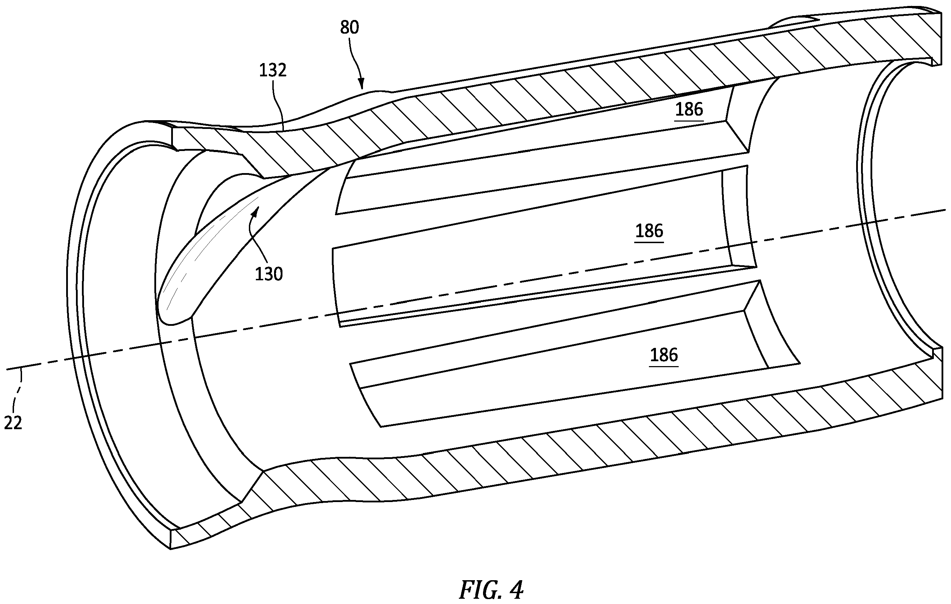

While the thrust links 126 extend radially across the intermediate case 80, the thrust links 126 may be structurally decoupled from the intermediate case 80. For example, referring to FIG. 2, each thrust link 126 may pass through a respective thrust link aperture 130 in a sidewall 132 of the intermediate case 80; see also FIGS. 3 and 4. Each thrust link 126 may pass unobstructed through the respective thrust link aperture 130 without a structural coupling between the thrust link 126 and the intermediate case 80. Thus, without the connection between the support structure 78 and the intermediate case 80 for example, it may be possible for the intermediate case 80 to move (e.g., translate, slide, etc.) longitudinally along each thrust link 126. In other words, each thrust link 126 is connected to the support structure 78 independent of the intermediate case 80. The intermediate case 80 therefore may not be subject to additional loads carried by the thrust links 126 during aircraft operation.

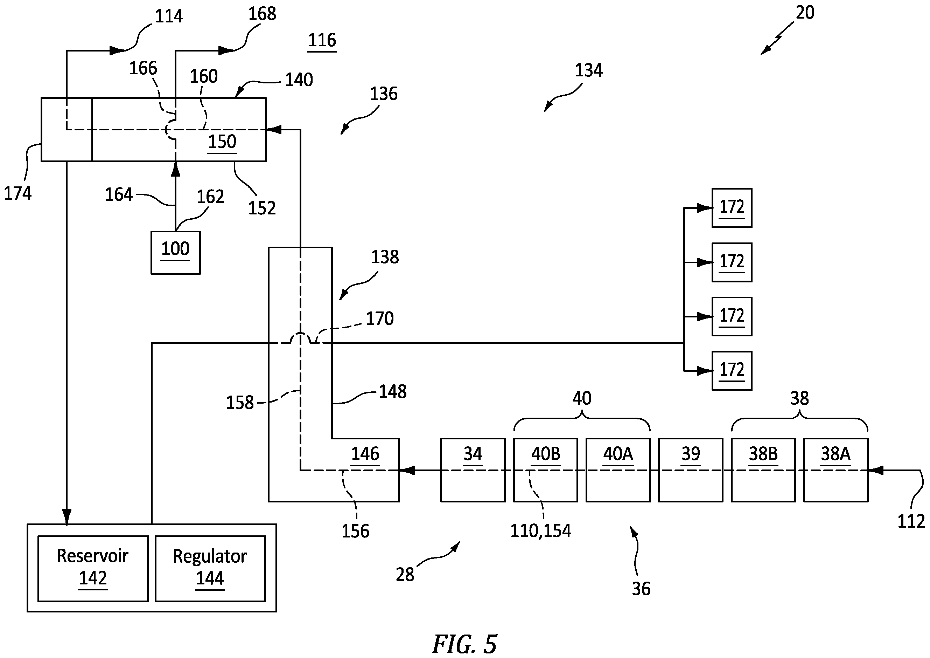

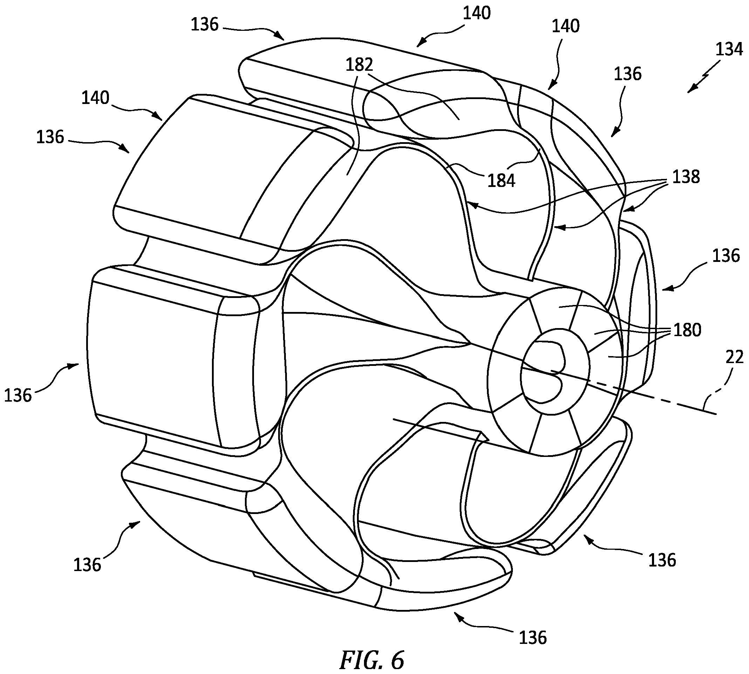

Referring to FIG. 5, the aircraft propulsion system 20 may also include a water and heat energy recovery system 134. This recovery system 134 is configured to recover at least some of the water vapor produced by the combustion of the fuel-air mixture within the combustion chamber 120 (see FIG. 1). The recovery system 134 is also configured to evaporate the recovered water using heat energy recuperated from the combustion products to provide steam for use in the engine core 36; e.g., in the combustor section 39. The recovery system 134 of FIG. 5, for example, includes one or more heat exchange (HX) systems 136 (one shown in FIG. 5 for ease of illustration; see also FIG. 6). Referring to FIG. 6, the HX systems 136 are distributed circumferentially about the axis 22 in an array; e.g., a circular array. Each HX system 136 of FIG. 5 includes a water evaporator module 138 and a water condenser module 140. The recovery system 134 may also include a water reservoir 142 and/or a system flow regulator 144 (e.g., a pump and/or a valve).

The water evaporator module 138 includes a water evaporator 146 within (e.g., and integral with) an evaporator duct 148; e.g., an upstream core duct. The water condenser module 140 includes a water condenser 150 within (e.g., and integral with) a condenser duct 152; e.g., a downstream core duct. Each heat exchanger 146, 150 may extend substantially or completely longitudinally along an entirety of the respective heat exchanger module 138, 140; e.g., substantially or completely filling its respective duct 148, 152. Alternatively, one or more or all of the heat exchangers 146 and 150 may each form a select section of the respective heat exchanger module 138, 140 longitudinally along and within its respective duct 148, 152. This section may be disposed at an inlet into the respective duct 148, 152, at an outlet from the respective duct 148, 152, or at an intermediate location along the respective duct 148, 152 between its inlet and its outlet. Still alternatively, one or more or all of the heat exchangers 146 and 150 may each be divided into a plurality of discrete heat exchange units which form a plurality of discrete sections of the heat exchanger module 138, 140 longitudinally along and within its respective duct 148, 152. However, for ease of description, each heat exchanger module 138, 140 may generally be described below as having its respective duct 148, 152 substantially or completely filled by its respective heat exchanger 146, 150.

The water evaporator module 138 and the water condenser module 140 are fluidly coupled inline with the core flowpath 110. For example, the core flowpath 110 of FIG. 1 includes a (e.g., annular) base leg 154 and a plurality of (e.g., parallel, non-annular) heat exchange (HX) legs 156. The base leg 154 of FIG. 5 extends sequentially through the LPC section 38A, the HPC section 38B, the combustor section 39, the HPT section 40A, the LPT section 40B and the PT section 34 from the core inlet 112 to an intersection with the HX legs 156 at a downstream end of the PT section 34. Each HX leg 156 is associated with a respective HX system 136 (see also FIG. 1). Each HX leg 156 of FIG. 5 branches (e.g., splits) off from the base leg 154 at the intersection and extends from the PT section 34, sequentially through (a) the evaporator duct 148 and a corresponding gas (e.g., combustion products) flowpath 158 of the water evaporator 146 and (b) the condenser duct 152 and a corresponding gas (e.g., combustion products) flowpath 160 of the water condenser 150, to the core exhaust 114. Briefly, the core exhaust 114 may be formed by a common outlet for all of the HX legs 156. Alternatively, the core exhaust 114 may be formed by a plurality of discrete outlets, where each outlet may be fluidly coupled with a respective single one of the HX legs 156 (or a respective sub-set of the HX legs 156).

Referring to FIG. 1, each water condenser module 140 is fluidly coupled with the bypass flowpath 100. For example, each water condenser module 140 of FIG. 1 is fluidly coupled with and downstream of a bleed 162 from (or a separator projecting into) the bypass flowpath 100. With this arrangement, referring to FIG. 5, a cooling flowpath 164 extends longitudinally from its bleed 162, through the water condenser module 140 and a corresponding gas (e.g., cooling air) flowpath 166 of the water condenser 150, to an exhaust 168 from the respective cooling flowpath 164. Briefly, the cooling flowpath exhaust 168 may be formed by a common outlet for all of the water condenser modules 140. Alternatively, the cooling flowpath exhaust 168 may be formed by a plurality of discrete outlets, where each outlet may be fluidly coupled with a respective single one of the water condenser modules 140 (or a respective sub-set of the water condenser modules 140).

The water reservoir 142 is configured to hold water before, during and/or after turbine engine operation. The water reservoir 142, for example, may be configured as or otherwise include a tank, a cylinder, a pressure vessel, a bladder or any other type of water storage container. The water reservoir 142 of FIG. 5 is fluidly coupled with and between the respective water condenser gas flowpath 160 and a water flowpath 170 of the respective water evaporator module 138 and its water evaporator 146. The system flow regulator 144 is arranged with the water reservoir 142, and configured to direct and/or meter a flow of the water from the water reservoir 142 to one or more other components 172 of the turbine engine 28. One or more of the turbine engine components 172 may each be configured as or otherwise include a steam injector. Each steam injector may be configured to inject the steam into the combustion chamber 120 (see FIG. 1). One or more of the turbine engine components 172 may also or alternatively be configured as an outlet for introducing the steam for cooling the combustor; e.g., a combustor wall, etc. The present disclosure, however, is not limited to the foregoing exemplary turbine engine components which utilize the steam. In particular, various other uses for steam in a turbine engine are known in the art, and the present disclosure is not limited to any particular one thereof.

During operation of the recovery system 134, relatively cool cooling air (e.g., the bled bypass air) is directed into the water condenser gas flowpath 166. The relatively hot combustion products, including the water vapor, are directed into the other water condenser gas flowpath 160. The water condenser module 140 and its water condenser 150 exchange heat energy between the cooling air flowing within the water condenser gas flowpath 166 and the combustion products flowing within the water condenser gas flowpath 160. The combustion products flowing within the water condenser gas flowpath 160 are typically warmer than the cooling air flowing within the water condenser gas flowpath 166. The water condenser module 140 and its water condenser 150 are thereby operable to cool the combustion products using the cooling air. This cooling of the combustion products may condense at least some of the water vapor (e.g., the gaseous water) flowing within the water condenser gas flowpath 160 into liquid water droplets. At least some or all of the liquid water may be collected and separated from the remaining gaseous combustion products by a water separator 174 and subsequently directed to the water reservoir 142 for (e.g., temporary) storage. Here, the water separator 174 is configured as or otherwise includes a gutter integrated into (or connected downstream of) the water condenser module 140. However, various other types of separators are known in the art, and the present disclosure is not limited to any particular ones thereof.

The system flow regulator 144 directs the water from the water reservoir 142 into and through the water evaporator water flowpath 170. The relatively hot combustion products are further directed through the water evaporator gas flowpath 158, for example, prior to flowing through the water condenser gas flowpath 160. The water evaporator module 138 and its water evaporator 146 exchange heat energy between the water flowing within the water evaporator water flowpath 170 and the combustion products flowing within the water evaporator gas flowpath 158. The combustion products flowing within the water evaporator gas flowpath 158 are typically warmer than the liquid water flowing within the water evaporator water flowpath 170. The water evaporator module 138 and its water evaporator 146 are thereby operable to heat the water using the combustion products and thereby recuperate the heat energy from the combustion products. This heating of the water may evaporate at least some or all of the liquid water flowing within the water evaporator water flowpath 170 into gaseous water - steam. At least some of this steam is directed to the turbine engine components 172 for use in the engine core 36; e.g., use in the combustor section 39.

Referring to FIG. 1, each water evaporator module 138 and its evaporator duct 148 may be configured to radially cross the bypass flowpath 100 from an inner cavity 176 (e.g., an annular volume, an arcuate volume, compartment, chamber, etc.) of the housing inner structure 70 to an outer cavity 178 (e.g., an annular volume, an arcuate volume, compartment, chamber, etc.) of the housing outer structure 72. Each water evaporator module 138 and its evaporator duct 148 of FIG. 1, for example, includes an inner section 180, an outer section 182 and an intermediate section 184.

The inner section 180 is disposed within the inner cavity 176. The inner section 180 projects axially out (or otherwise away) from a forward, downstream end of the PT section 34 along the axis 22 and then radially out to the intermediate section 184. The inner section 180 is housed within the housing inner structure 70 and its intermediate case 80. The intermediate case 80 of FIG. 1, for example, axially overlaps and extends circumferentially around the inner section 180.

The outer section 182 may be disposed within the outer cavity 178. The outer section 182 of FIG. 1, for example, projects radially out from the intermediate section 184 into the outer cavity 178 to the respective water condenser module 140 of the same HX system 136. The outer section 182 is housed within the housing outer structure 72, and is radially outboard of the bypass flowpath 100.

The intermediate section 184 is fluidly coupled with and between the inner section 180 and the outer section 182. The intermediate section 184 of FIG. 1, for example, extends radially from the inner section 180 to the outer section 182. With this arrangement, each water evaporator module 138 and its intermediate section 184 extend radially across the bypass flowpath 100.

At the interface between the inner section 180 and the intermediate section 184, the respective water evaporator module 138 and its evaporator duct 148 extend radially across the intermediate case 80. For example, each water evaporator module 138 and its evaporator duct 148 project through a respective port 186 (e.g., an opening, a window, etc.) in the sidewall 132 of the intermediate case 80; see also ports 186 in FIGS. 2-4. Each water evaporator module 138 and its evaporator duct 148 may thereby radially cross the intermediate case 80 without a structural coupling between the respective evaporator duct 148 and the intermediate case 80. Each water evaporator module 138 and its evaporator duct 148 may thereby be configured structurally independent of the intermediate case 80. Of course, it is contemplated at least one (e.g., annular) seal element may (or may not) be provided to seal a gap between (a) each respective water evaporator module 138 and its evaporator duct 148 and (b) the intermediate case 80.

With structural independence between each water evaporator module 138 and the intermediate case 80, each respective water evaporator module 138 and its evaporator duct 148 may not be affected by structural dynamics of the intermediate case 80, and vice versa. For example, loads associated with operation of the turbine engine 28 may be transferred through the intermediate case 80 between the PT case 76 and the support structure 78 without imparting those loads onto the water evaporator modules 138. The structural independence may accommodate thermally induced shifting between (a) each water evaporator module 138 and its evaporator duct 148 and (b) the intermediate case 80 during propulsion system operation. In addition, slight (e.g., sealed or vented) gaps separating the intermediate case 80 from the water evaporator modules 138 and their ducts 148 may facilitate formation of the intermediate case 80 from less expensive and/or lower melting point materials such as, but not limited to, aluminum (Al) or a metal or non-metal composite.

In some embodiments, each water evaporator module 138 and its evaporator duct 148 may be fixedly connected to the PT case 76.

In some embodiments, each water evaporator module 138 and its evaporator duct 148 may be coupled to the respective water condenser duct 152 through a compliant connection. This compliant connection may be configured as or otherwise include a slip j oint, a baffle or the like.

In some embodiments, the engine core 36 may be arranged coaxial with the fan rotor 42 and the geartrain 58. The present disclosure, however, is not limited to such an exemplary arrangement. For example, a centerline of the engine core 36 may alternatively be radially and/or angularly offset from a centerline of the fan rotor 42 and/or a centerline of the geartrain 58.

The turbine engine 28 is generally described above as a turbofan turbine engine. The present disclosure, however, is not limited to such an exemplary turbofan turbine engine configuration. The fan rotor 42, for example, may be configured as another type of propulsor rotor for generating propulsive thrust. Furthermore, the recovery system 134 may be included in a turbine engine configured with a single spool or with multi-spool engine core. The present disclosure therefore is not limited to any particular types or configurations of turbine engines.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft, comprising:
a support structure (78);
a fan rotor (42) rotatably supported by the support structure (78);
a power turbine rotor (43) coupled to and configured to drive rotation of the fan rotor (42);
a power turbine case (76) housing the power turbine rotor (43);
an intermediate case (80) extending axially along an axis (22) between and structurally tying the power turbine case (76) to the support structure (78);
a bypass flowpath (100) fluidly coupled with and downstream of the fan rotor (42), an inner wall of the bypass flowpath (100) formed by the intermediate case (80);
a core duct (148) extending radially across the intermediate case (80); and
a core flowpath (110) extending across the power turbine rotor (43) and through the core duct (148).

2. The assembly of claim 1, wherein the core duct (148) is:
structurally independent of the intermediate case (80); and/or
movable relative to the intermediate case (80).

3. The assembly of claims 1 or 2, wherein the core duct (148) further extends radially across the bypass flowpath (100).

4. The assembly of any preceding claim, further comprising an evaporator (146) disposed in the core duct (148), optionally further comprising:
a condenser (150) disposed radially outboard of the bypass flowpath (100);
the core flowpath (110) extending away from the power turbine rotor (43), through the evaporator (146), to the condenser (150).

5. The assembly of any of claims 1 to 3, further comprising:
a condenser (150) disposed radially outboard of the bypass flowpath (100);
the core flowpath (110) extending away from the power turbine rotor (43), through the core duct (148), to the condenser (150).

6. The assembly of any preceding claim, wherein
the core duct (148) is one of a plurality of core ducts (148) extending radially across the intermediate case (80), the plurality of core ducts (148) are arranged circumferentially about the axis (22) in an array; and
the core flowpath (110) splits into a plurality of flowpath legs (156) downstream of the power turbine rotor (43), and each of the plurality of flowpath legs (156) extends through a respective one of the plurality of core ducts (148).

7. The assembly of any preceding claim, wherein
the support structure (78) comprises an inner platform (88);
the inner platform (88) is axially next to and downstream of the fan rotor (42); and
the inner wall is a first inner wall, and the inner platform (88) forms a second inner wall of the bypass flowpath (100) upstream of the first inner wall.

8. The assembly of any preceding claim, further comprising:
a geartrain (58) coupling the power turbine rotor (43) to the fan rotor (42);
the support structure (78) circumscribing and supporting the geartrain (58).

9. The assembly of any preceding claim, further comprising:
an airframe structure (122); and
a thrust link (126) extending radially across the intermediate case (80) and structurally tying the support structure (78) to the airframe structure (122), the thrust link (126) coupled to the support structure (78) independent of the intermediate case (80), optionally further comprising a torque link (128) structurally tying at least one of the intermediate case (80) or the power turbine case (76) to the airframe structure (122).

10. The assembly of any preceding claim, further comprising:
an inner nacelle (30) structure axially overlapping and extending circumferentially about the power turbine case (76);
the inner wall comprising a first inner wall, and the inner nacelle (30) structure forming a second inner wall of the bypass flowpath (100) downstream of the first inner wall.

11. The assembly of any preceding claim, further comprising:
a fan section (32) comprising the fan rotor (42);
a power turbine section (34) comprising the power turbine rotor (43); and
a turbine engine core (36) including a core compressor section (38), a core combustor section (39) and a core turbine section (40);
the core flowpath (110) extending through the core compressor section (38), the core combustor section (39), the core turbine section (40), the power turbine section (34) and the core duct (148) between an inlet (112) into the core flowpath (110) and an exhaust (114) from the core flowpath (110), optionally wherein the power turbine section (34) is disposed axially between the fan section (32) and the turbine engine core (36).

12. An assembly for an aircraft, comprising:
a fan rotor (42);
a geartrain (58) coupled to the fan rotor (42);
a support structure (78) circumscribing and supporting the geartrain (58);
a power turbine rotor (43) coupled to the geartrain (58), the power turbine rotor (43) configured to drive rotation of the fan rotor (42) through the geartrain (58);
a power turbine case (76) housing the power turbine rotor (43);
an intermediate case (80) extending axially along an axis (22) between and structurally tying the power turbine case (76) to the support structure (78);
a core duct (148) extending radially across the intermediate case (80); and
a core flowpath (110) extending across the power turbine rotor (43) and through the core duct (148).

13. The assembly of claim 12, further comprising a thrust link (126) extending radially across the intermediate case (80) and fixed to the support structure (78).

14. An assembly for an aircraft, comprising:
a support structure (78);
a fan section (32) comprising a fan rotor (42), the fan rotor (42) rotatably supported by the support structure (78);
a power turbine section (34) comprising a power turbine rotor (43), the power turbine rotor (43) coupled to and configured to drive rotation of the fan rotor (42);
a power turbine case (76) housing the power turbine section (34);
an intermediate case (80) extending axially along an axis (22) between and structurally tying the power turbine case (76) to the support structure (78);
a turbine engine core (36) including a core compressor section (38), a core combustor section (39) and a core turbine section (40), wherein a core flowpath (110) extends through the core compressor section (38), the core combustor section (39), the core turbine section (40), the power turbine section (34) and radially across the intermediate case (80) and a bypass flowpath (100) between an inlet (112) into the core flowpath (110) and an exhaust (114) from the core flowpath (110);
the bypass flowpath (100) downstream of the fan rotor (42) and radially outboard of the intermediate case (80), the power turbine section (34) and the turbine engine core (36);
an airframe structure (122); and
a mounting link extending radially across the intermediate case (80) and structurally tying the support structure (78) to the airframe structure (122), the mounting link coupled to the support structure (78) independent of the intermediate case (80).

15. The assembly of claim 14, wherein:
the mounting link comprises a thrust link (126); and/or
the assembly further comprises a plurality of core ducts (148) arranged circumferentially around the axis (22), each of the plurality of core ducts (148) extending radially across and structurally independent of the intermediate case (80), the core flowpath (110) splitting into a plurality of flowpath legs (156) downstream of the power turbine section (34), and each of the plurality of flowpath legs (156) extending through a respective one of the plurality of core ducts (148).
